# EUROPÄISCHE PATENTSCHRIFT

(11) **EP 1 882 105 B1**
(45) Veröffentlichungstag und Bekanntmachung des Hinweises auf die Patenterteilung: **10.06.2009**
(21) Anmeldenummer: 06725480.5
(22) Anmeldetag: 31.03.2006
(51) Int. Cl.: F16B 5/02, F16B 25/10, F25D 23/02

(54) **GEHÄUSE FÜR EIN ELEKTRISCHES GERÄT**
HOUSING FOR AN ELECTRIC APPLIANCE
CAISSE POUR APPAREIL ELECTRIQUE

(30) Priorität: 10.05.2005 DE 202005007418 U
(43) Veröffentlichungstag der Anmeldung: 30.01.2008
(73) Patentinhaber: BSH Bosch und Siemens Hausgeräte GmbH, 81739 München (DE)
(72) Erfinder: GÜTTINGER, Marc, 89542 Herbrechtingen (DE)
(86) Internationale Anmeldenummer: PCT/EP2006/061234
(87) Internationale Veröffentlichungsnummer: WO 2006/120081

(56) Entgegenhaltungen:
- DE-A1- 4 340 334
- DE-A1- 19 953 834

## Beschreibung

Die vorliegende Erfindung betrifft ein Gehäuse für ein elektrisches Gerät und insbesondere die Erdung von Komponenten dieses Gehäuses.

Um die Betriebssicherheit von elektrischen Geräten sicher zu stellen, müssen Metallteile, die ein Benutzer berühren kann und die im Betrieb des Gerätes Spannung führen oder bei denen die Möglichkeit besteht, dass sie durch eine Störung Spannung führend werden, geerdet sein. Bei blanken Metallteilen kann dies durch Anpressen, z.B. durch festes Anschrauben, an einen Masseleiter geschehen. Ein solcher Masseleiter kann z.B. ein mit einem Massepotenzial einer Netzsteckdose verbundener Leitungsdraht sein, oder ein beliebiges elektrisch leitfähiges Teil des Gehäuses, das mit einem solchen Draht direkt oder indirekt elektrisch leitend verbunden ist.

Bei Metallteilen, die lackiert oder in anderer Weise elektrisch isolierend beschichtet sind, genügt ein solcher Presskontakt nicht, um zuverlässig eine leitfähige Verbindung herzustellen.

Um einen zuverlässigen leitfähigen Kontakt zu einem lackierten oder anderweitig isolierend überzogenen Blech herzustellen, kann auch eine Schraube mit scharfkantigem Profil verwendet werden, die sich, eingesteckt in ein Loch dieses Blechs, ihr Gewinde in dem Loch selbst schneidet und dabei die isolierende Beschichtung durchdringt. Es ist allerdings schwierig, mit einer solchen Verbindung die erforderliche Betriebssicherheit zu erreichen, denn damit die Schraube das Gewinde schneiden kann, ohne dass auf sie ein übermäßiges Drehmoment ausgeübt werden muss, muss das Blech recht weich oder dünn sein, mit der Folge, dass die durch die Schraube geschaffene Verbindung nur gering belastbar ist.

Die DE 199 53 834 A1 zeigt eine Anordnung mit einer Wand, die eine feste Struktur und eine daran befestigte Haut umfasst, und einer Schraube, die in eine Bohrung der Struktur eingreift und sich durch eine Ausnehmung der Haut erstreckt, wobei die Ausnehmung umgebendes Material der Haut durch die Schraube verdrängt ist.

Aufgabe der vorliegenden Erfindung ist, ein Gehäuse für ein elektrisches Gerät anzugeben, bei dem eine elektrische leitfähige Verbindung zwischen zwei Metallteilen auf einfache, zuverlässige und dennoch belastbare Weise gebildet ist.

Die Aufgabe wird gelöst durch ein Gehäuse für ein elektrisches Gerät mit einer Wand, die eine elektrisch isolierende Struktur und eine an der Struktur befestigte elektrisch leitfähige Haut umfasst, einen elektrisch leitfähigen Träger und wenigstens einer Schraube, die in eine Bohrung der Struktur eingreift und dabei den Träger gegen die Wand gedrückt hält, wobei die Schraube sich durch eine Ausnehmung der Haut erstreckt und die Ausnehmung umgebendes Material der Haut durch die Schraube verdrängt ist.

Durch die Materialverdrängung stellt die Schraube einen sicheren elektrischen Kontakt zu der leitfähigen Haut her; indem sie gleichzeitig in die Bohrung der festen Struktur eingreift, findet sie dort sicheren Halt, so dass der elektrische Kontakt zwischen der Schraube und der leitfähigen Haut durch Kräfte, die auf die Schraube oder die Wand einwirken, nicht beeinträchtigt wird. So wird eine zuverlässige und haltbare leitende Verbindung zwischen der Haut und dem elektrisch leitfähigen Träger erhalten.

Die Gestalt der Ausnehmung unterliegt kaum Einschränkungen. Vorzugsweise ist die Ausnehmung ein Loch, doch kann sie auch als eine zum Rand der Ausnehmung hin offene Kerbe realisiert sein.

Vorzugsweise weist die Ausnehmung einen gezackten Rand auf, da die Zacken durch die Schraube wesentlich leichter verformbar sind als z.B. ein im wesentlichen geradliniger Randverlauf.

Vorzugsweise liegen zwei gezackte Ränder der Ausnehmung einander gegenüber, so dass die Schraube zwischen von zwei Seiten hervorspringenden Zacken eingeklemmt ist.

Bei der elektrisch leitfähigen Haut kann es sich um eine äußere Hülle des Gehäuses handeln. Da die Haut an der elektrisch isolierenden festen Struktur befestigt ist, braucht sie nicht selbsttragend zu sein, daher kann für sie ein dünnes und preiswertes Blech verwendet werden.

Bei der festen Struktur kann es sich um ein Formteil aus Kunststoff handeln.

Wenn das Blech lackiert ist, fehlt die Lackschicht vorzugsweise in der unmittelbaren Umgebung der Ausnehmung, um einen leitfähigen Kontakt zwischen dem Blech und der Schraube zu begünstigen, auch wenn die Lackschicht einen unmittelbaren elektrischen Kontakt zwischen dem Blech und dem Träger verhindert.

Die Erfindung ist bevorzugt auf ein Kältegerätegehäuse anwendbar. An dem Träger kann z.B. ein Verdichter des Kältegeräts montiert sein, so dass der Träger gleichzeitig zur mechanischen Halterung als auch zur Erdung des Verdichters dienen kann.

Weitere Merkmale und Vorteile der Erfindung ergeben sich aus der nachfolgenden Beschreibung eines Ausführungsbeispiels unter Bezugnahme auf die beigefügten Figuren. Es zeigen:

Fig. 1 eine auseinandergezogene perspektivische Teilansicht eines erfindungsgemäßen Gehäuses

Fig. 2 einen Schnitt durch den Träger des Gehäuses von Fig. 1 senkrecht zur Längsachse der hindurchverlaufenden Schraube; und

Fig. 3 einen zu Fig. 2 analogen Schnitt gemäß einer abgewandelten Ausgestaltung der Erfindung.

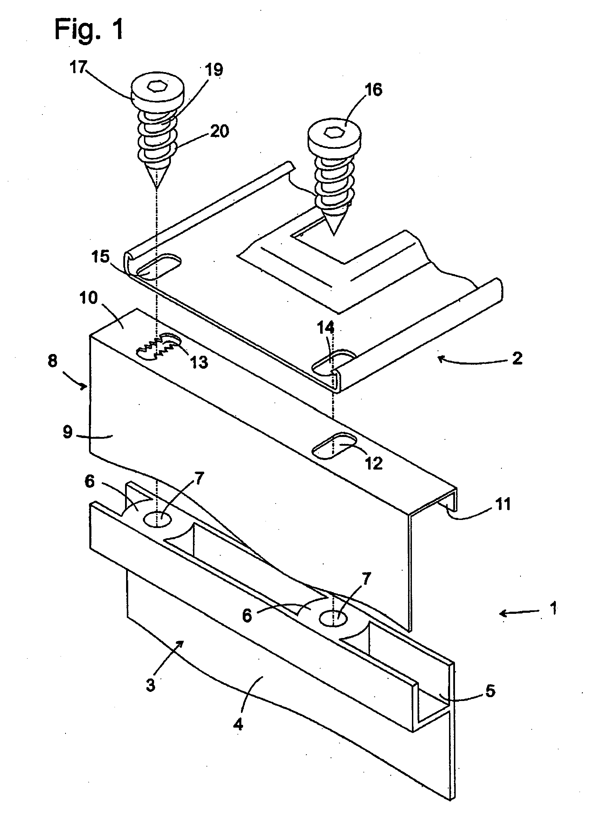

Fig. 1 zeigt in einer perspektivischen auseinandergezogenen Ansicht eine Verbindung zwischen einer Gehäusewand 1 eines Kältegeräts und einer Trägerschiene 2, die vorgesehen ist, um darauf einen (nicht dargestellten) Verdichter des Kältegeräts zu montieren.

Die ausschnittweise gezeigte Gehäusewand 1 ist zusammengesetzt aus einem Innenteil 3 aus Kunststoff und einem aus lackiertem Blech geformten Außenteil 8. Das Innenteil 3 umfasst eine Platte 4, die eine Innenseite der Gehäusewand bildet und an deren freiem Rand einteilig ein U-Profil 5 geformt ist. In der in der Perspektive der Fig. 1 nach oben offenen Nut des U-Profils 5 sind mehrere massive Kunststoffblöcke 6 geformt, die die sich gegenüberliegenden Schenkel des U-Profils 5 miteinander verbinden und in denen jeweils eine Sackbohrung 7 gebildet ist.

Das Außenteil 8 der Gehäusewand 1 umfasst eine zu der Wandplatte 4 des Innenteils 3 parallele Platte 9 sowie einen von dem Rand der Platte 9 rechtwinklig abgeknicktem ersten Steg 10 und einen vom Rand des ersten Stegs 10 parallel zur Platte 9 abgewinkelten zweiten Steg 11. Im zusammengefügten Zustand überdeckt der erste Steg 10 die Nut des U-Profils 5, und die Platte 9 und der zweite Steg 11 liegen außen an den Schenkeln des U-Profils 5 an. Zwei Löcher 12, 13 sind im ersten Steg 10 so platziert, dass sie sich mit den Sackbohrungen 7 überschneiden. Während das Loch 12 im zusammengefügten Zustand der Gehäusewand 1 die gesamte Öffnung der entsprechenden Sackbohrung 7 freilässt, gegenüberliegende Längsseiten des Lochs weit vorspringende Zähne gebildet, die die Öffnungen der entsprechenden Sachbohrungen 7 teilweise verdecken.

Die aus einem kräftigen Blech geformte Trägerschiene 2 ist mit zwei Langlöchern 14, 15 versehen, die sich, wenn die Trägerschiene 2 auf der Gehäusewand 1 abgestützt ist, mit den Löchern 12, 13 des Steges 10 überschneiden. Die Löcher 12, 13, 14, 15 sind vorgesehen, um jeweils eine Schraube 16, 17 durch sie hindurch in die Sackbohrungen 7 des Innenteils 3 einzuführen. Die Durchmesser der Sackbohrungen 7 sind so bemessen, dass die Schrauben 16, 17 beim Hineindrehen selbsttätig ein Gewinde in die Wände der Sackbohrungen 7 schneiden und sich dadurch verankern. Die Abmessungen der Löcher 12, 14, 15 sind so gewählt, dass die Schäfte der Schrauben 16, 17 sie frei passieren können. Die Schraube 16, die die Löcher 14, 12 passiert, hält daher lediglich, wenn sie bis zum Anschlag in die Sackbohrung 7 eingedreht ist, die Trägerschiene 2 gegen den Steg 10 gedrückt, stellt aber nicht zwangsläufig einen Erdungskontakt zwischen der Trägerschiene 2 und dem Außenteil 8 aus Blech her.

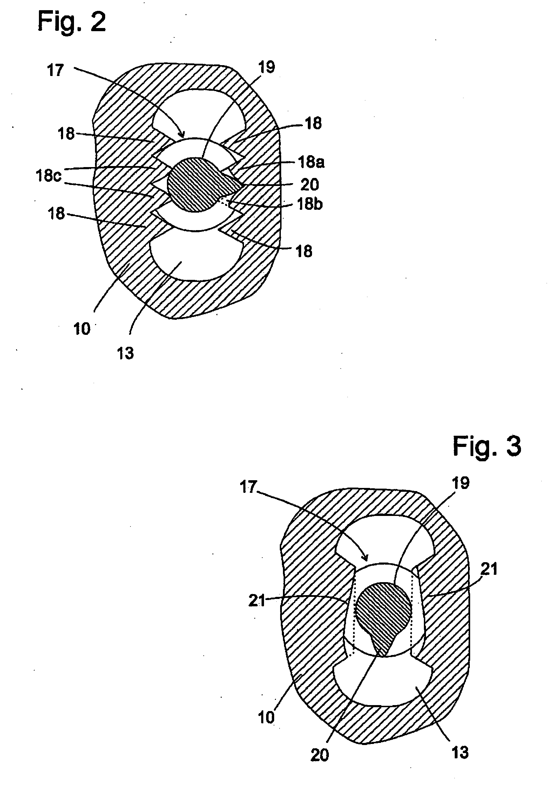

Fig. 2 zeigt einen Schnitt durch den Steg 10 in der Umgebung des mit Zähnen 18 an seinen gegenüberliegenden Längsseiten versehenen Lochs 13 mit der durch das Loch 13 verlaufenden Schraube 17. Man erkennt den zylindrischen Schaft 19 der Schraube 17 und, von dem Schaft 19 in der Perspektive der Fig. nach rechts vorspringend, die das Gewinde der Schraube bildende Rippe 20. Diese Rippe 20 passiert zwischen zwei benachbarten Zähnen 18 und verdrängt dabei die Spitze eines der Zähne, mit 18a bezeichnet, nach unten aus der Schnittebene heraus und die des zweiten Zahns, mit 18b bezeichnet, nach oben aus der Schnittebene heraus. Die Spitzen von Zähnen 18c an der den Zähnen 18a, 18b gegenüberliegenden Längsseite des Lochs 13 werden vom Schaft 19 der Schraube in seitlicher Richtung gestaucht. Der innige Kontakt zwischen den Zähnen 18a, 18b, 18c und der Rippe 20 gewährleistet einen elektrisch gut leitfähigen Kontakt zwischen der Schraube 17 und dem Außenteil 8. Wenn die Schraube 17 bis zum Anschlag eingedreht ist, so dass ihr Kopf von oben gegen die Trägerschiene 2 drückt, ist auch zwischen ihr und der Trägerschiene ein sicherer elektrischer Kontakt gewährleistet, der Außenteil 8 und Trägerschiene 2 leitend miteinander verbindet.

Selbstverständlich kann die Rippe 20 das Loch 13 nicht nur zwischen zwei Zähnen derselben Längsseite passieren, wie in Fig. 2 gezeigt, sondern auch zwischen zwei Zähnen gegenüberliegender Längsseiten. Die Wirkung ist die gleiche, von den zwei zum Durchgang der Rippe 20 durch die Schnittebene benachbarten Zähnen 18 wird eine nach oben und der andere nach unten verdrängt.

Die Zähne 18 erlauben es, das zum Eindrehen der Schraube 17 erforderliche Drehmoment gering zu halten, da die Verformung durch die Schraube 17 nur die Zähne erfasst und diese durch ihre frei vorspringende Form vergleichsweise leicht verformbar sind. Wenn das Material des Stegs 10 sehr dünn und dadurch von sich aus leicht verformbar ist, kommt zur Sicherstellung eines ausreichenden Kontaktdrucks zwischen den Rändern des Lochs 13 und der Schraube 17 auch eine Form des Lochs wie in Fig. 3 dargestellt in Betracht. Anstelle einzelner Zähne springt hier jeweils von beiden Längsseiten her eine breite Lasche 21 nach innen vor. Beim Eindrehen der Schraube 17 wird von den zwei Laschen 21 eine durch die Rippe 20 der Schraube aus der Schnittebene der Fig. nach oben und die andere nach unten weggedrückt, und durch den aus der Verformung resultierenden Druck der Laschen 21 auf die Rippe 20 ist ein sicherer elektrischer Kontakt gewährleistet.

Da die Schrauben 16, 17 in den selbstgeschnittenen Gewinden in den Sacklöchern 7 sicher fixiert sind, besteht keine Gefahr, dass durch zwischen der Wand 1 und dem Träger 2 auftretende Kräfte die Schraube 17 sich in dem Loch 13 bewegt und der elektrische Kontakt zwischen der Schraube 17 und dem Außenteil 8 verloren geht.

## Patentansprüche

1. Gehäuse für ein elektrisches Gerät, mit einer Wand (1), die eine elektrisch isolierende feste Struktur (3) und eine an der Struktur befestigte elektrisch leitfähige Haut (8) umfasst, einem elektrisch leitfähigen Träger (2) und wenigstens einer Schraube (17), die in eine Bohrung (7) der Struktur (3) eingreift und den Träger (2) gegen die Wand (1) gedrückt hält, wobei die Schraube (17) sich durch eine Ausnehmung (13) der Haut (8) erstreckt und die Ausnehmung (13) umgebendes Material der Haut (8) durch die Schraube (17) verdrängt ist.

2. Gehäuse nach Anspruch 1, **dadurch gekennzeichnet, dass** die Ausnehmung (13) ein Loch ist.

3. Gehäuse nach Anspruch 1 oder 2, **dadurch gekennzeichnet, dass** die Ausnehmung (13) einen gezackten Rand aufweist, der durch die Schraube (17) verformt ist.

4. Gehäuse nach Anspruch 3, **dadurch gekennzeichnet, dass** zwei gezackte Ränder der Ausnehmung (13) einander gegenüberliegen.

5. Gehäuse nach einem der vorhergehenden Ansprüche, **dadurch gekennzeichnet, dass** die elektrisch leitfähige Haut (8) ein eine äußere Hülle des Gehäuses bildendes Blech ist.

6. Gehäuse nach einem der vorhergehenden Ansprüche, **dadurch gekennzeichnet, dass** die feste Struktur (3) ein Formteil aus Kunststoff ist.

7. Gehäuse nach Anspruch 5 oder 6, **dadurch gekennzeichnet, dass** das Blech (8) eine Lackschicht trägt und dass die Lackschicht in der Umgebung der Ausnehmung (13) fehlt.

8. Gehäuse nach einem der vorhergehenden Ansprüche, **dadurch gekennzeichnet, dass** es ein Kältegerätegehäuse ist und dass auf dem Träger (2) ein Verdichter montiert ist.

## Claims

1. Housing for an electrical appliance, with a wall (1), which comprises an electrically insulating solid structure (3) and an electrically conductive skin (8) fastened to the structure, an electrically conductive support (2) and at least one screw (17), which engages in a bore (7) of the structure (3) and keeps the support (2) pressed against the wall (1), wherein the screw (17) extends through a recess (13) of the skin (8) and material, which surrounds the recess (13), of the skin (8) is displaced by the screw (17).

2. Housing according to claim 1, **characterised in that** the recess (13) is a hole.

3. Housing according to claim 1 or 2, **characterised in that** the recess (3) has a serrated edge which is deformed by the screw (17).

4. Housing according to claim 3, **characterised in that** two serrated edges of the recess (3) lie opposite one another.

5. Housing according to any one of the preceding claims, **characterised in that** the electrically conductive skin (8) is a plate forming an outer casing of the housing.

6. Housing according to any one of the preceding claims, **characterised in that** the solid structure (3) is a moulded part of plastics material.

7. Housing according to claim 5 or 6, **characterised in that** the plate (8) carries a paint layer and that the paint layer is absent in the area surrounding the recess (13).

8. Housing according to any one of the preceding claims, **characterised in that** it is a refrigerator housing and that a compressor is mounted on the support (2).

## Revendications

1. Boîtier pour un appareil électrique, muni d'une paroi (1) qui contient une structure solide (3) électriquement isolante et une couche (8) électriquement conductible et fixée sur la structure, d'un support (2) électriquement conducteur et d'au moins une vis (17) qui a prise dans un alésage (7) de la structure (3) et maintient le support (2) pressé contre la paroi (1), la vis (17) s'étendant à travers un évidement (13) de la couche (8) et la matière de la couche (8), entourant l'évidement (13), étant déplacée par la vis (17).

2. Boîtier selon la revendication 1, **caractérisé en ce que** l'évidement (13) est un trou.

3. Boîtier selon la revendication 1 ou 2, **caractérisé en ce que** l'évidement (13) présente un bord dentelé qui est déformé par la vis (17).

4. Boîtier selon la revendication 3, **caractérisé en ce que** deux bords dentelés de l'évidement (13) sont situés l'un en face de l'autre.

5. Boîtier selon l'une quelconque des revendications précédentes, **caractérisé en ce que** la couche (8) électriquement conductible est une tôle formant une enveloppe extérieure du boîtier.

6. Boîtier selon l'une quelconque des revendications précédentes, **caractérisé en ce que** la structure solide (3) est une pièce moulée en plastique.

7. Boîtier selon la revendication 5 ou 6, **caractérisé en ce que** la tôle (8) porte une couche de laque et **en ce que** la couche de laque fait défaut dans les environs de l'évidement (13).

8. Boîtier selon l'une quelconque des revendications précédentes, **caractérisé en ce que** c'est un boîtier d'appareil de refroidissement et **en ce qu'**un condensateur est monté sur le support (2).
